# EUROPÄISCHE PATENTSCHRIFT

(11) **EP 2 722 784 B1**
(45) Veröffentlichungstag und Bekanntmachung des Hinweises auf die Patenterteilung: **17.07.2019**
(21) Anmeldenummer: 13004941.4
(22) Anmeldetag: 15.10.2013
(51) Int. Cl.: G06F 21/44, G06F 21/75, G09C 1/00, H04L 9/32

(54) **Elektronische Vorrichtung**
Electronic device
Dispositif électronique

(30) Priorität: 17.10.2012 DE 102012020367
(43) Veröffentlichungstag der Anmeldung: 23.04.2014
(73) Patentinhaber: Giesecke+Devrient Mobile Security GmbH, 81677 München (DE)
(72) Erfinder: Goschenhofer, Frank Dr., 86161 Augsburg (DE)
(74) Vertreter: Klunker IP Patentanwälte PartG mbB

(56) Entgegenhaltungen:
- WO-A1-2009/156904

## Beschreibung

Die Erfindung betrifft eine elektronische Vorrichtung mit einer Mikroprozessoreinheit und einem kryptographischen Sicherheitsmodul.

Aus dem Stand der Technik ist es bekannt, elektronische Vorrichtungen mit kryptographischen Sicherheitsmodulen auszustatten, welche eine oder mehrere kryptographische Funktionalitäten in der Vorrichtung implementieren. Insbesondere werden solche Sicherheitsmodule zur Abwicklung von sicherheitsrelevanten Transaktionen bzw. Datenübertragungen, zur sicheren Aufbewahrung von Daten und zur Abwicklung kritischer Schritte in Sicherheitsprotokollen eingesetzt.

Zur Sicherung von elektronischen Vorrichtungen ist es ferner bekannt, Sicherheitssiegel an der Vorrichtung aufzubringen, über welche ein Benutzer beurteilen kann, ob die Vorrichtung bzw. das Gehäuse der Vorrichtung geöffnet wurde und somit die Vorrichtung unter Umständen manipuliert wurde.

In der Druckschrift DE 10 2007 048 423 A1 wird ein digitales RFID-Siegel zur Anbringung an einer Zugangsöffnung eines Kfz-Steuergeräts beschrieben, wobei das Siegel beim Öffnen der Zugangsöffnung zerstört bzw. verändert wird. Mit dem RFID-Siegel wird eine kontaktlose Kommunikation mit einem entsprechenden Lesegerät in dem Steuergerät ermöglicht.
Das Dokument WO 2003/007231 A1 offenbart eine Chipkarte mit einem darauf vorgesehenen RFID-Element, welches ein von der Chipkarte ausgesendetes Sicherheitssignal beeinflusst und hierüber die Karte absichert. Das Dokument WO 2006/086848 A1 offenbart einen Container, an dessen Öffnung ein sichtbares RFID-Siegel angebracht ist. WO 2009/156904 A1 zeigt eine (PUF-) Vorrichtung, welche als Label auf einem Gegenstand angebracht sein kann und aus einer Eigenschaft des Gegenstandes kryptographische Daten ableitet. Die PUF-Vorrichtung kann die kryptografischen Daten über ihre RFID-Schnittstelle mit einer externen Steuereinheit mit NFC-Schnittstelle austauschen.

Aufgabe der Erfindung ist es, eine elektronische Vorrichtung mit einer Mikroprozessoreinheit und einem kryptographischen Sicherheitsmodul zu schaffen, welche einfach und effizient gegen unbefugte Manipulationen geschützt ist.

Diese Aufgabe wird durch die Vorrichtung gemäß Patentanspruch 1 gelöst. Weiterbildungen der Erfindung sind in den abhängigen Ansprüchen definiert.

Die erfindungsgemäße elektronische Vorrichtung umfasst eine eigene Mikroprozessoreinheit und ein kryptographisches Sicherheitsmodul, mit dem in an sich bekannter Weise eine oder mehrere kryptographische Funktionalitäten in der Vorrichtung realisiert werden. Das Sicherheitsmodul beinhaltet eine Kommunikationseinheit zur kontaktlosen Kommunikation mit einem oder mehreren, an der Vorrichtung angeordneten Siegeln, welche im Folgenden auch als Sicherheitssiegel bezeichnet werden. Der Begriff der Anordnung eines Sicherheitssiegels an der Vorrichtung ist dabei derart zu verstehen, dass eine Verbindung zwischen Vorrichtung und Sicherheitssiegel besteht. Insbesondere sind das oder die Sicherheitssiegel auf der Vorrichtung aufgebracht (z.B. aufgeklebt).

Das Sicherheitsmodul ist derart ausgestaltet, dass es mit Hilfe der kontaktlosen Kommunikation zwischen Sicherheitsmodul und dem oder den Sicherheitssiegeln feststellt, ob das oder die Sicherheitssiegel manipuliert sind. Der Begriff der Manipulation ist dabei weit zu verstehen und umfasst mechanische und elektronische Manipulation des oder der Sicherheitssiegel. Unter einer Manipulation eines Sicherheitssiegels ist insbesondere auch ein Entfernen des Sicherheitssiegels von der Vorrichtung zu verstehen. Das oder die Sicherheitssiegel sind ferner derart ausgestaltet, dass die Unversehrtheit des oder der Sicherheitssiegel durch einen Benutzer optisch überprüfbar ist, d.h. das oder die Sicherheitssiegel umfassen ein oder mehrere optische Sicherheitsmerkmale, anhand derer optisch überprüfbar ist, ob das entsprechende Sicherheitssiegel beschädigt bzw. zerstört wurde.

Die erfindungsgemäße elektronische Vorrichtung weist den Vorteil auf, dass mittels eines oder mehrerer optisch überprüfbarer Sicherheitssiegel eine physische Zuordnung zwischen dem Sicherheitsmodul und dem oder den Siegeln in einer elektronischen Vorrichtung erreicht wird. Es können somit Angriffe detektiert werden, mit denen versucht wird, das Sicherheitssiegel zu entfernen bzw. mechanisch zu manipulieren. Darüber hinaus wird mittels der kontaktlosen Kommunikation zwischen Sicherheitsmodul und dem oder den Sicherheitssiegeln eine logische Zuordnung zwischen Sicherheitsmodul und dem oder den Siegeln erreicht, so dass auch durch das Sicherheitsmodul Manipulationen festgestellt werden können. In einer einfachen Variante der Erfindung kann eine Manipulation dann festgestellt werden, wenn das Sicherheitsmodul feststellt, dass eine vormals vorhandene kontaktlose Kommunikation mit einem Sicherheitssiegel nicht mehr vorhanden ist. Dies deutet darauf hin, dass das Siegel zerstört bzw. entfernt wurde. In einer weiteren Ausführungsform ist die kontaktlose Kommunikation zwischen dem Sicherheitsmodul und dem zumindest einen Sicherheitssiegel verschlüsselt.

In einer besonders bevorzugten Ausführungsform weist die kontaktlose Kommunikation zwischen dem Sicherheitsmodul und dem oder den Sicherheitssiegeln eine kurze bzw. mittlere Reichweite im Bereich von wenigen Zentimetern bzw. wenigen Metern (z.b. maximal 10m) auf. Dieser Bereich wird vorliegend als Nahbereich bezeichnet. Vorzugsweise handelt es sich dabei um die kurzreichweitige NFC-Kommunikation (NFC = Near Field Communication), welche auch unter dem Begriff Nahfeld-Kommunikation bekannt ist. Das Sicherheitssiegel stellt dabei insbesondere einen RFID-Transponder und das Sicherheitsmodul ein entsprechendes RFID-Lesegerät dar. Alternativ könnte die Kommunikation bei mittlerer Reichweite über Infrarot oder UHF-Felder erfolgen.

In einer weiteren bevorzugten Ausführungsform dient das Sicherheitsmodul der Vorrichtung dazu, eine oder mehrere Funktionen der Vorrichtung kryptographisch abzusichern. Eine solche kryptographische Absicherung umfasst vorzugsweise die Verschlüsselung von Daten, die zwischen der Vorrichtung und einer externen Rechnereinheit übermittelt werden. Ist die elektronische Vorrichtung ein Zahlungsverkehrsterminal, können mit dem Sicherheitsmodul die durchgeführten Zahlungstransaktionen verschlüsselt werden. Ist die elektronische Vorrichtung ein Verbrauchserfassungsgerät, wie z.B. ein intelligenter Stromzähler, können mit dem Sicherheitsmodul die erfassten Verbrauchsdaten verschlüsselt werden. Neben den Ausgestaltungen als Zahlungsverkehrsterminal bzw. Verbrauchserfassungsgerät kann die elektronische Vorrichtung auch beliebige andere Geräte bzw. Einrichtungen darstellen. In der detaillierten Beschreibung sind weitere Beispiele elektronischer Vorrichtungen genannt.

In einer weiteren Ausführungsform umfasst die elektronische Vorrichtung ein Gehäuse, wobei zumindest ein Sicherheitssiegel und gegebenenfalls alle vorhandenen Sicherheitssiegel derart an dem Gehäuse angebracht sind, dass das zumindest eine Sicherheitssiegel von außerhalb des Gehäuses sichtbar ist und beim Öffnen des Gehäuses beschädigt und damit manipuliert wird. Diese Beschädigung kann durch einen Benutzer optisch erfasst werden, so dass der Benutzer hierüber die Information erhält, dass das Gehäuse geöffnet und die Vorrichtung unter Umständen unbefugt manipuliert wurde.

In einer weiteren Variante der erfindungsgemäßen Vorrichtung werden im Rahmen der kontaktlosen Kommunikation zwischen dem Sicherheitsmodul und zumindest einem Sicherheitssiegel und gegebenenfalls jedem vorhandenen Sicherheitssiegel ein oder mehrere Parameter von dem zumindest einen Sicherheitssiegel an das Sicherheitsmodul übermittelt, wobei der oder die Parameter eine oder mehrere Funktionen der Vorrichtung beeinflussen und/oder ermöglichen und/oder die Vorrichtung personalisieren. Beispielsweise können durch die Parameter bestimmte Funktionen, wie z.B. eine bestimmte Teilsoftware, freigeschaltet werden. Gegebenenfalls wird die Inbetriebnahme der Vorrichtung erst durch die Übertragung der Parameter ermöglicht. Zur Personalisierung der Vorrichtung können als Parameter insbesondere eine eindeutige Identifikationsnummer von dem Sicherheitssiegel an das Sicherheitsmodul übertragen werden.

In einer weiteren Ausgestaltung der erfindungsgemäßen Vorrichtung sind mehrere Sicherheitssiegel vorgesehen, wobei im Rahmen der kontaktlosen Kommunikation zwischen dem Sicherheitsmodul und jedem Sicherheitssiegel eine oder mehrere, zum jeweiligen Sicherheitssiegel gehörige Parameter von dem jeweiligen Sicherheitssiegel an das Sicherheitsmodul übermittelt werden, wobei eine Verknüpfung des oder der Parameter der mehreren Sicherheitssiegel eine oder mehrere Funktionen der Vorrichtung beeinflussen und/oder ermöglichen und/oder die Vorrichtung personalisieren. Mit den beiden soeben beschriebenen Varianten der erfindungsgemäßen Vorrichtung können deren Funktionalitäten individuell durch die Anbringung einer oder mehrerer Sicherheitssiegel angepasst werden.

In einer weiteren Ausführungsform der erfindungsgemäßen Vorrichtung werden im Falle, dass das Sicherheitsmodul feststellt, dass das oder die Sicherheitssiegel manipuliert sind, eine oder mehrere vorbestimmte Maßnahmen durch das Sicherheitsmodul veranlasst, wobei die Maßnahme oder Maßnahmen insbesondere die Ausgabe einer Alarmmeldung und/oder die Deaktivierung von einer oder mehreren Funktionen der Vorrichtung umfasst. Der Begriff der Ausgabe der Warnmeldung ist dabei weit zu verstehen und kann insbesondere eine Ausgabe der Alarmmeldung direkt an der Vorrichtung sowie gegebenenfalls auch eine Übermittlung der Alarmmeldung an eine entfernte Einheit über eine geeignete Kommunikationsverbindung umfassen.

In einer weiteren Variante der erfindungsgemäßen Vorrichtung kann das Sicherheitsmodul über die kontaktlose Kommunikation mit zumindest einem Sicherheitssiegel und gegebenenfalls jedem vorhandenen Sicherheitssiegel der Authentizität des zumindest einen Sicherheitssiegels verifizieren. Die Verifikation kann dabei z.B. über die Überprüfung einer digitalen Signatur erfolgen, welche mittels der kontaktlosen Kommunikation von einem Sicherheitssiegel an das Sicherheitsmodul übertragen wird. Im Falle einer erfolgreichen Verifikation der Authentizität des zumindest einen Sicherheitssiegels wird vorzugsweise eine Bestätigung von dem Sicherheitsmodul über die kontaktlose Kommunikation an das zumindest eine Sicherheitssiegel übermittelt, wobei die Bestätigung kontaktlos mittels eines externen Lesegeräts aus dem zumindest einen Sicherheitssiegel auslesbar ist. Auf diese Weise kann ein Benutzer mit einem entsprechenden Lesegerät die Authentizität des Sicherheitssiegels überprüfen.

In einer weiteren Variante der erfindungsgemäßen Vorrichtung sind das Sicherheitsmodul und zumindest ein Sicherheitssiegel und gegebenenfalls jedes Sicherheitssiegel über ein an sich bekanntes Pairing einander zugeordnet. Zum Beispiel kann das Pairing durch den Austausch eines gemeinsamen Geheimnisses zwischen Sicherheitsmodul und Sicherheitssiegel erfolgen. Die Zuordnung über das Pairing wird vorzugsweise im Rahmen der kontaktlosen Kommunikation zwischen dem Sicherheitsmodul und dem zumindest einen Sicherheitssiegel genutzt, insbesondere zur Authentifizierung und/oder verschlüsselten Kommunikation. Beispielsweise kann die Verschlüsselung über ein beim Pairing ausgetauschtes Geheimnis erfolgen. Das Pairing wird insbesondere initial vor Inbetriebnahme der Vorrichtung, z.B. beim Aufbringen des oder der Siegel, durchgeführt.

In einer weiteren Variante der erfindungsgemäßen Vorrichtung werden im Falle einer Manipulation zumindest eines Sicherheitssiegels vorbestimmte Daten oder andere Daten als bei einem nicht manipulierten Sicherheitssiegel von dem zumindest einen Sicherheitssiegel an das Sicherheitsmodul übermittelt oder die kontaktlose Kommunikation zwischen dem Sicherheitsmodul und dem zumindest einen Sicherheitssiegel wird unterbunden. Hierdurch wird auf einfache Weise dem Sicherheitsmodul die Information über eine Manipulation eines entsprechenden Sicherheitssiegels gegeben.

In einer weiteren Variante der erfindungsgemäßen Vorrichtung misst zumindest ein Sicherheitssiegel und gegebenenfalls jedes Sicherheitssiegel einen oder mehrere Zustandsparameter einer oder mehrerer Komponenten des zumindest einen Sicherheitssiegels, z.B. entsprechende Parameter von einem oder mehreren Schaltkreisen, wie elektrische Widerstände, Kapazitäten, Induktivitäten und dergleichen. Dabei werden im Falle einer Manipulation des zumindest einen Sicherheitssiegels der oder die Zustandsparameter verändert. Somit kann über geeignete Zustandsparameter eine Manipulation festgestellt werden. Der oder die Zustandsparameter werden vorzugsweise an das Sicherheitsmodul übermittelt, so dass die Manipulation durch das Sicherheitsmodul festgestellt werden kann. Gegebenenfalls kann die Manipulation auch schon im Sicherheitssiegel erkannt werden, woraufhin eine geeignete Information vom Sicherheitssiegel an das Sicherheitsmodul übertragen wird. Bei Empfang dieser Information stellt das Sicherheitsmodul das Vorhandensein einer Manipulation fest. Der oder die Zustandsparameter, die an das Sicherheitsmodul übermittelt werden, können gegebenenfalls auch im Rahmen einer Authentisierung des Sicherheitssiegels verwendet werden, wie in der detaillierten Beschreibung näher dargelegt ist.

Das in der erfindungsgemäßen Vorrichtung verwendete Sicherheitsmodul kann auf verschiedene Weise durch Hardware bzw. Software realisiert werden. In einer besonders bevorzugten Ausführungsform ist das Sicherheitsmodul ein an sich bekanntes Hardware-Sicherheitsmodul, insbesondere in der Form eines austauschbaren tragbaren Datenträgers oder eines fest in der Vorrichtung eingebauten Datenträgers.

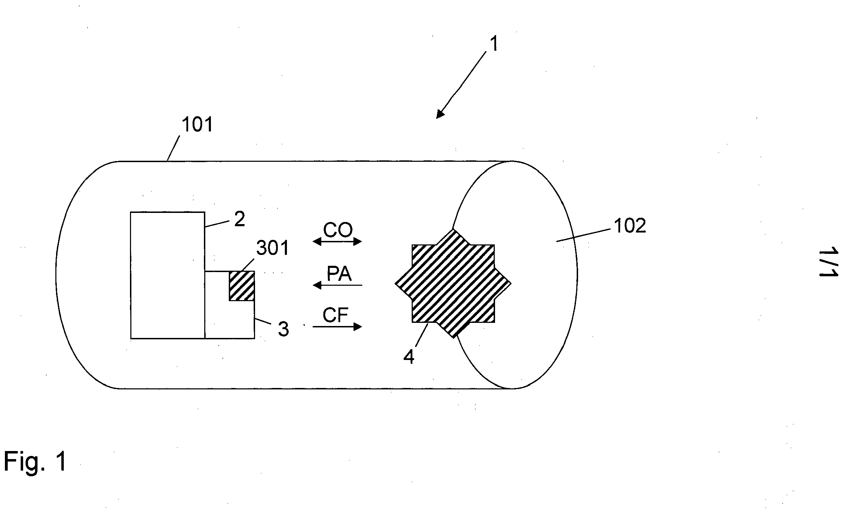

Ausführungsbeispiele der Erfindung werden nachfolgend anhand der beigefügten Fig. 1 detailliert beschrieben. Diese Figur zeigt eine schematische Darstellung eines Beispiels einer erfindungsgemäßen Vorrichtung.

Die in Fig. 1 wiedergegebene Vorrichtung 1 ist ein elektronisches Gerät, dessen Gehäuse schematisch über einen Zylinder 101 und eine Deckfläche 102 angedeutet ist. Das dargestellte Gehäuse ist dabei lediglich beispielhaft und kann auch eine beliebige andere Form aufweisen. Im Gehäuse befindet sich eine Mikroprozessoreinheit bzw. CPU 2 (CPU = Central Processing Unit), mit der entsprechende Funktionalitäten der Vorrichtung realisiert werden. Beispiele von entsprechenden elektronischen Vorrichtungen werden weiter unten gegeben. Neben der Mikroprozessoreinheit 2 ist ferner ein Sicherheitsmodul 3 vorgesehen, welches z.B. ein Hardware-Sicherheitsmodul in der Form eines tragbaren Datenträgers und vorzugsweise einer Chipkarte ist. In diesem Sicherheitsmodul 3 ist eine Kommunikationseinheit 301 zur kontaktlosen NFC-Kommunikation integriert. Diese Kommunikationseinheit 301 ist ein untrennbarer Bestandteil des Sicherheitsmoduls 3 und stellt in diesem Sinne einen internen RFID-Leser dar, der z.B. in einem Sicherheitsmodul in der Form einer Mikro-SD-Karte verbaut sein kann.

Die Betriebssoftware des Sicherheitsmoduls 3 ist dazu ausgelegt, um basierend auf der NFC-Kommunikation mit einem Sicherheitssiegel 4 kontaktlos zu kommunizieren. Diese kontaktlose Kommunikation ist in Fig. 1 mit dem Doppelpfeil CO angedeutet. Das Sicherheitssiegel stellt somit einen geeigneten RFID-Transponder dar und beinhaltet einen Sicherheitscontroller, der in der Lage ist, über NFC-Kommunikation mit dem Sicherheitsmodul 3 zu kommunizieren. Zur kontaktlosen NFC-Kommunikation zwischen Kommunikationseinheit 301 und Sicherheitssiegel 4 sind ferner geeignete Antennen (z.B. Leiterschleifen) in der Kommunikationseinheit bzw. dem Sicherheitssiegel integriert. Gegebenenfalls kann das Sicherheitssiegel analog zu dem Sicherheitsmodul auch kryptographische Rechenoperationen durchführen.

In der Ausführungsform der Fig. 1 ist das Sicherheitssiegel an der Kante zwischen dem Zylinder 101 und der Deckfläche 102 des Gehäuses der Vorrichtung 1 angeordnet, z.B. über ein Klebemittel aufgeklebt. Das Sicherheitssiegel 4 ist dabei derart ausgestaltet, dass die Unversehrtheit des Siegels optisch durch einen Benutzer festgestellt werden kann, d.h. das Sicherheitssiegel beinhaltet optische Sicherheitsmerkmale, anhand deren erkannt werden kann, ob das Siegel durch einen Angreifer mechanisch verändert wurde. Vorzugsweise ist das Sicherheitssiegel nach Art eines Etiketts ausgestaltet, welches beim Öffnen des Gehäuses durch Entfernen der Deckfläche 102 durchtrennt wird.

In der hier beschriebenen Ausführungsform werden im Rahmen der kontaktlosen Kommunikation CO von dem Siegel 4 unter anderem Parameter PA an das Sicherheitsmodul 3 übermittelt, welche für die Funktion des Sicherheitsmoduls benötigt werden. Das heißt, ist das Siegel beschädigt und somit außer Betrieb, können diese Parameter nicht an das Sicherheitsmodul übermittelt werden. Als Konsequenz kann dann z.B. eine Alarmmeldung direkt an der Vorrichtung optisch bzw. akustisch ausgegeben werden. Ebenso kann die Alarmmeldung an eine externe Stelle übermittelt werden. Ferner kann der Betrieb der Mikroprozessoreinheit 2 und somit der gesamten Vorrichtung eingestellt werden, wenn entsprechende Parameter nicht empfangen werden können.

In der Ausführungsform der Fig. 1 führt das Sicherheitsmodul 3 ferner eine Authentizitätsprüfung des Sicherheitssiegels 4 durch. Dabei werden neben den Parametern PA auch entsprechende Informationen von dem Siegel an das Sicherheitsmodul übermittelt, welche eine Überprüfung der Authentizität ermöglichen. Zum Beispiel kann das Sicherheitsmodul aus dem Sicherheitssiegel eine eindeutige, signierte Seriennummer auslesen und die Signatur dieser Seriennummer verifizieren. Bei erfolgreicher Verifikation wird die Authentizität des Siegels vom Sicherheitsmodul 3 festgestellt. In diesem Fall wird dann ein Bestätigungssignal CF von dem Sicherheitsmodul 3 an das Sicherheitssiegel 4 übermittelt. Dieses Bestätigungssignal kann dann gegebenenfalls durch eine externe Vorrichtung (nicht gezeigt), wie z.B. einen tragbaren RFID-Leser, aus dem Siegel 4 ausgelesen werden. Auf diese Weise kann ein Benutzer überprüfen, ob das Sicherheitssiegel als authentisch eingestuft wurde und damit nicht elektronisch manipuliert wurde. Demgegenüber kann eine mechanische Manipulation des Siegels durch eine optische Prüfung des Benutzers festgestellt werden.

In einer Variante ist das Sicherheitssiegel 4 der Fig. 1 derart aufgebaut, dass es einen an ihm durchgeführten Manipulationsversuch selbst detektieren kann. Insbesondere kann die Detektion basierend auf einer Überprüfung von physikalischen Eigenschaften des im Sicherheitssiegel enthaltenen elektronischen Schaltkreises erfolgen. Hierzu können Veränderungen von Materialeigenschaften, wie ein elektrischer Widerstand, die Kapazität zwischen leitfähigen Folienstrukturen, Induktivitäten, und dergleichen herangezogen werden. Sollten diese Eigenschaften von einem Normwert abweichen, wird somit ein Manipulationsversuch festgestellt, den das Sicherheitssiegel 4 über die kontaktlose Kommunikation CO dem Sicherheitsmodul 3 mitteilt.

Um die Erkennung eines Manipulationsangriffs zu verbessern, kann das jeweils für die Vorrichtung 1 verwendete Sicherheitssiegel individuelle Strukturen aufweisen, mit denen Manipulationen detektiert werden können. Zum Beispiel können spezielle Materialien mit Druckverfahren und/oder durch Einwirkung von Laserimpulsen während der Herstellung des Sicherheitssiegels aufgebracht werden. Diese Eigenschaften können mit Hilfe des elektronischen Schaltkreises im Siegel gemessen und dort verarbeitet werden bzw. an das Sicherheitsmodul übertragen werden. Gegebenenfalls können die Daten von mehreren solcher Eigenschaften in geeigneter Weise über Verknüpfungsoperationen zur Absicherung der Daten kombiniert werden.

Das auf der elektronischen Vorrichtung angebrachte Siegel kann gegebenenfalls dazu genutzt werden, um die elektronische Vorrichtung zu personalisieren. Insbesondere kann dabei in dem Siegel eine entsprechende Identitätsnummer gespeichert sein. Ist die Vorrichtung beispielsweise ein sog. intelligenter Stromzähler (auch als Smartmeter bezeichnet), kann mit dem Siegel dem Smartmeter eine gültige Identität des Stromnetzbetreibers zugewiesen werden. Ebenso kann die elektronische Vorrichtung über das Siegel mit einer gültigen Identität einer Prüfbehörde versehen werden. Gegebenenfalls besteht auch die Möglichkeit, dass an die elektronische Vorrichtung mehrere Siegel angebracht werden. Dabei können die Informationen, die von diesen mehreren Siegeln unabhängig repräsentiert werden, gegebenenfalls logisch miteinander verknüpft werden. Ein Siegel kann z.B. eine Eichung oder eine Sicherheitszertifizierung repräsentieren, die für einen bestimmten Zeitraum gültig ist, während ein anderes Siegel eine Vertragsbeziehung zur Lieferung von Gütern oder Dienstleistungen darstellt. Das Sicherheitsmodul kann dabei die entsprechenden Informationen aus den Siegeln auslesen, wobei nur im Falle, dass eine logische Verknüpfung der Informationen einen vorbestimmten Wert aufweist, bestimmte Funktionalitäten in der Vorrichtung freigeschaltet werden.

In einer weiteren Variante der erfindungsgemäßen Vorrichtung können das Sicherheitsmodul und das Sicherheitssiegel über einen an sich bekannten Paring-Mechanismus einander zugeordnet werden. Zum Beispiel kann im Rahmen des Paring-Mechanismus ein gemeinsames Geheimnis unter Verwendung des Diffie-Hellmann-Verfahrens zwischen dem Sicherheitsmodul und dem Siegel ausgetauscht werden. Das Paring wird dabei initial bei Anbringung des Siegels auf der Vorrichtung durchgeführt. Bei einer späteren Kommunikation besteht dann die Möglichkeit, dass sich das Sicherheitsmodul und das Sicherheitssiegel gegenseitig authentifizieren und miteinander verschlüsselt kommunizieren.

Die erfindungsgemäße elektronische Vorrichtung kann in einer Vielzahl von verschiedenen Anwendungsfeldern zum Einsatz kommen. Insbesondere kann die elektronische Vorrichtung ein Verbrauchserfassungsgerät sein, z.B. das bereits oben erwähnte Smartmeter, welches ein elektronisches Auslesen des über das Smartmeter erfassten Stromverbrauchs ermöglicht. Ebenso kann die Vorrichtung ein Zahlungsverkehrsterminal, z.B. ein Kreditkartenterminal, oder ein anderes Gerät sein, das Zahlungsvorgänge mit Gegenständen abwickelt, die einen Wert in geeigneter Form abspeichern.

Die erfindungsgemäße elektronische Vorrichtung kann ferner ein Lesegerät für Identitätsnachweise, wie z.B. Personalausweise, Pässe und dergleichen, darstellen. Ebenso kann die Vorrichtung ein Gateway sein, das die Kopplung von Smartmetern mit Verteilnetzbetreibern über ein Fernverkehrssystem ermöglicht (ein sog. Smartmeter-Gateway). Die elektronische Vorrichtung kann ferner auch als Zeiterfassungsterminal ausgestaltet sein. Weitere Anwendungsszenarien sind elektronische Vorrichtungen in der Form von eichfähigen Messgeräten (wie z.B. Waagen, Blutdruckmesser), Erfassungsgeräte für Füllstände, Systemzustände mechanischer Einrichtungen (z.B. Türen, Klappen, Ventile, Sicherheitseinrichtungen an Maschinen, Verkaufsautomaten, ATMs und dergleichen), Schlösser und Zugangskontrolleinrichtungen, Verkehrsmittel (z.B. Kraftfahrzeuge) und dergleichen.

In einem Anwendungsszenario kann eine elektronische Vorrichtung in der Form eines Smartmeters mit Hilfe eines Sicherheitssiegels über ein Abrechnungssystem im Internet einer Kundenbeziehung zugeordnet werden. Die Identität des Smartmeters ist dabei dem Abrechnungssystem aus dem internen Sicherheitsmodul bekannt. Zur Zuordnung des Smartmeters zu einem bestimmten Kunden wird diesem ein Sicherheitssiegel zugeschickt, das dieser dann an dem Smartmeter befestigt. Die Identität des Sicherheitssiegels wird durch das Sicherheitsmodul ausgelesen und anschließend an das Abrechnungssystem im Internet übermittelt, wodurch eine Zuordnung der Abrechnung des Smartmeters zu dem Kunden erfolgt.

In einem weiteren Anwendungsszenario kann die Funktion einer elektronischen Vorrichtung erst freigeschaltet werden, wenn ein Kunde vom Hersteller der Vorrichtung ein Sicherheitssiegel erhalten hat und dieses an der Vorrichtung befestigt hat. In einem weiteren Anwendungsfall kann der Halter eines Kraftfahrzeugs sein Fahrzeug nur starten, wenn er sowohl ein entsprechendes Steuersiegel für eine bestimmte Besteuerungsperiode als auch ein Sicherungssiegel erworben und an dem Kraftfahrzeug angebracht hat. Das Kraftfahrzeug kann in diesem Sinne auch als eine Variante einer elektronischen Vorrichtung angesehen werden.

Im Folgenden werden weitere bevorzugte Realisierungen einer elektronischen Vorrichtung mit Sicherheitsmodul und daran angebrachtem Sicherheitssiegel erläutert. In einer Variante ist auf dem Sicherheitssiegel ein geheimer Schlüssel gespeichert, der im Rahmen der Authentifizierung des Sicherheitssiegels bzw. zur verschlüsselten Kommunikation zwischen Sicherheitsmodul und Sicherheitssiegel genutzt werden kann. Dabei ist in dem Sicherheitssiegel eine geeignete Krypto-Einheit vorgesehen, mit der entsprechende kryptographische Funktionalitäten realisiert werden können. Im Rahmen einer NFC-Kommunikation ist im Nahfeld in der Regel genügend Energie vorhanden, um die Krypto-Einheit mit dieser Energie zu betreiben, so dass keine separate Energieversorgung in dem Sicherheitssiegel integriert werden muss. Wie bereits oben erwähnt, ist das Sicherheitssiegel vorzugsweise an dem Gehäuse der entsprechenden Vorrichtung angebracht, welche das Sicherheitsmodul beinhaltet. Das Sicherheitssiegel ist somit prinzipbedingt dafür vorgesehen, zerstört zu werden, wenn das Gehäuse geöffnet wird. Soll somit das Sicherheitsmodul in ein anderes Gehäuse transferiert werden, muss das Sicherheitssiegel erst gebrochen und damit zerstört werden. Die logische Einheit aus Sicherheitssiegel und Sicherheitsmodul existiert dann nicht mehr, so dass ein Transfer des Sicherheitsmoduls in eine andere elektronische Vorrichtung zwecklos ist.

Im Falle eines Manipulationsversuches kann das Sicherheitssiegel seine Datenverarbeitung derart anpassen, dass andere Daten als ohne Manipulation an das Sicherheitsmodul gesendet werden. Insbesondere kann das Sicherheitssiegel dabei seinen eigenen Zustand erfassen bzw. messen, wobei dieser Zustand bei einer Manipulation verändert wird. Das entsprechende Messergebnis wird digital codiert und an das Sicherheitsmodul übermittelt. Wie oben erwähnt, kann der Zustand über entsprechende Eigenschaften des Schaltkreises im Siegel erfasst werden, wie z.B. über induktive, kapazitive, ohmsche Widerstände oder andere Materialeigenschaften. Mittels der Übertragung des entsprechenden Messergebnisses, z.B. zusammen mit Daten zur Authentisierung gegenüber dem Sicherheitsmodul, kann dann das Sicherheitsmodul über die Auswertung der Veränderung des Messergebnisses eine Manipulation feststellen. Die Übermittlung von entsprechenden Messwerten hat ferner den Vorteil, dass Messschwankungen, die gegebenenfalls durch die Technik des Siegels sogar beabsichtigt sind, für einen Zufallseffekt sorgen, der das Kryptogramm der Authentisierung zusätzlich sichert. Eine Variante einer solchen Authentisierung wird nachfolgend erläutert.

Das Sicherheitsmodul übermittelt zunächst eine Zufallszahl ZZ an das Siegel. Anschließend misst das Siegel den eigenen Zustand ST oder nutzt Werte aus einem zurückliegenden Zeitraum. Schließlich berechnet das Siegel mit Hilfe eines auf ihm hinterlegten geheimen Schlüssels SK den verschlüsselten Wert ENC(STDZZ, SK). Dieser verschlüsselte Wert wird dann von dem Siegel an das Modul übertragen. Wenn das Modul den verschlüsselten Wert entschlüsseln kann, war die Authentisierung erfolgreich.

Gegebenenfalls ist es auch möglich, dass sich das Sicherheitsmodul gegenüber dem Sicherheitssiegel authentisiert, d.h. das Siegel weiß, dass es mit dem richtigen Sicherheitsmodul im Falle einer erfolgreichen Authentisierung kommuniziert. In einer weiteren Variante kann das Sicherheitssiegel ausgelagerte Daten des Sicherheitsmoduls speichern. Insbesondere können entsprechende Diagnosedaten der elektronischen Vorrichtung (z.B. eines Smartmeters) im Falle einer beginnenden Fehlfunktion der Vorrichtung auf dem Sicherheitssiegel hinterlegt werden. Selbst wenn die Vorrichtung bzw. das Smartmeter dann insgesamt ausfällt, können diese Daten noch aus dem Siegel ausgelesen werden. Sogar bei einer Beschädigung des Siegels kann das Auslesen dieser Daten noch funktionieren, sofern die Beschädigung nur Messwerte des Zustands des Siegels verändert. Im Falle der Beschädigung des Siegels durch einen Angreifer ist der Beschädigungszustand vorzugsweise nur unter Kenntnis des geheimen Schlüssels des Siegels elektronisch prüfbar. Ein Angreifer kann somit selbst nicht feststellen, ob sein Angriffsversuch bemerkt wurde, was die Ausarbeitung eines Angriffs erschwert.

Die im Vorangegangenen beschriebenen Ausführungsformen der erfindungsgemäßen Vorrichtung weisen eine Reihe von Vorteilen auf. Insbesondere kann die physische Integrität einer elektronischen Vorrichtung optisch durch einen Benutzer über ein Sicherheitssiegel bzw. mehrere Sicherheitssiegel überprüft werden. Darüber hinaus kann die logische Integrität der Vorrichtung im Rahmen einer kontaktlosen Kommunikation zwischen dem Sicherheitsmodul und dem Sicherheitssiegel überprüft werden. Insbesondere kann das Sicherheitsmodul der Vorrichtung Informationen über den Zustand des Sicherheitssiegels mittels der kontaktlosen Kommunikation erhalten, worüber Manipulationsversuche am Sicherheitssiegel erfasst werden können. Im Falle eines Manipulationsversuchs kann die Arbeitsweise der Vorrichtung angepasst werden, z.B. kann der Betrieb der Vorrichtung eingestellt werden bzw. eine Alarmmeldung an ein Hintergrundsystem gegeben werden. Die an der Vorrichtung vorhandenen Sicherheitssiegel können auch dazu genutzt werden, um bestimmte Eigenschaften der Vorrichtung zu personalisieren. Ferner können die Informationen, die von mehreren Siegeln unabhängig repräsentiert werden, gegebenenfalls logisch miteinander verknüpft werden. Darüber hinaus können eine oder mehrere Funktionalitäten der elektronischen Vorrichtung über entsprechende Informationen aus dem Sicherheitssiegel parametrisiert werden.

Durch die Verwendung eines Sicherheitsmoduls und eines optisch prüfbaren Sicherheitssiegels wird die Sicherheit der elektronischen Vorrichtung erhöht. Insbesondere kann das Vorhandensein bzw. der Zustand des Sicherheitssiegels in die Funktionalität der Vorrichtung einbezogen werden. Die Erfindung ist dabei besonders vorteilhaft für elektronische Vorrichtungen, welche sicherheitskritische Abläufe abwickeln, z.B. für Zahlungstransaktionsterminals, Verschlüsselungsgeräte zur Datenkommunikation und dergleichen.

## Patentansprüche

1. Elektronische Vorrichtung mit
- einer Mikroprozessoreinheit (2) und
- einem kryptographischen Sicherheitsmodul (3), das eine Kommunikationseinheit (301) zur kontaktlosen Kommunikation (CO) umfasst,
wobei die Kommunikationseinheit (301) zur kontaktlosen Kommunikation (CO) mit einem oder mehreren, an der Vorrichtung (1) getrennt von dem Sicherheitsmodul (3) angebrachten Sicherheitssiegeln (4) eingerichtet ist, und im Sicherheitsmodul (3) bei dessen Betrieb mit Hilfe der kontaktlosen Kommunikation (CO) zwischen Sicherheitsmodul (3) und dem oder den Sicherheitssiegeln (4) festgestellt wird, ob das oder die Sicherheitssiegel (4) manipuliert sind.

2. Vorrichtung nach Anspruch 1, **dadurch gekennzeichnet, dass** das oder die Sicherheitssiegel (4) derart ausgestaltet sind, dass die Unversehrtheit des oder der Sicherheitssiegel (4) durch einen Benutzer optisch überprüfbar ist.

3. Vorrichtung nach Anspruch 1 oder 2, **dadurch gekennzeichnet, dass** die kontaktlose Kommunikation (CO) eine Nahbereichs-Kommunikation ist.

4. Vorrichtung nach einem der Ansprüche 1 bis 3, **dadurch gekennzeichnet, dass** das Sicherheitsmodul (4) eine oder mehrere Funktionen der Vorrichtung (1) kryptographisch absichert.

5. Vorrichtung nach Anspruch 4, **dadurch gekennzeichnet, dass** die kryptographisch abgesicherte Funktion oder abgesicherten Funktionen eine verschlüsselte Übermittlung von Daten zwischen der Vorrichtung (1) und einer externen Rechnereinheit umfasst.

6. Vorrichtung nach einem der vorhergehenden Ansprüche, **dadurch gekennzeichnet, dass** die Vorrichtung (1) ein Gehäuse (101, 102) umfasst und zumindest ein Sicherheitssiegel (4) derart an dem Gehäuse (101, 102) angebracht ist.

7. Vorrichtung nach Anspruch 6, **dadurch gekennzeichnet, dass** das zumindest eine Sicherheitssiegel (4) von außerhalb des Gehäuses sichtbar ist und beim Öffnen des Gehäuses (101,102) beschädigt und damit manipuliert wird.

8. Vorrichtung nach einem der vorhergehende Ansprüche, **dadurch gekennzeichnet, dass** im Rahmen der kontaktlosen Kommunikation (CO) zwischen dem Sicherheitsmodul (4) und zumindest einem Sicherheitssiegel (4) ein oder mehrere Parameter (PA) von dem zumindest einem Sicherheitssiegel (4) an das Sicherheitsmodul (3) übermittelt werden, wobei der oder die Parameter (PA) eine oder mehrere Funktionen der Vorrichtung (1) beeinflussen und/oder ermöglichen und/oder die Vorrichtung (1) personalisieren.

9. Vorrichtung nach einem der vorhergehenden Ansprüche, **dadurch gekennzeichnet, dass** an der Vorrichtung (1) mehrere Sicherheitssiegel (4) vorgesehen sind, wobei im Rahmen der kontaktlosen Kommunikation (CO) zwischen dem Sicherheitsmodul (3) und jedem Sicherheitssiegel (4) eine oder mehrere, zum jeweiligen Sicherheitssiegel (4) gehörige Parameter (PA) von dem jeweiligen Sicherheitssiegel (4) an das Sicherheitsmodul (3) übermittelt werden, wobei eine Verknüpfung des oder der Parameter (PA) der mehreren Sicherheitssiegel (4) eine oder mehrere Funktionen der Vorrichtung (1) beeinflussen und/oder ermöglichen und/oder die Vorrichtung (1) personalisieren.

10. Vorrichtung nach einem der vorhergehenden Ansprüche, **dadurch gekennzeichnet, dass** im Falle, dass das Sicherheitsmodul (3) feststellt, dass das oder die Sicherheitssiegel (4) manipuliert sind, eine oder mehrere vorbestimmte Maßnahmen durch das Sicherheitsmodul (3) veranlasst werden, wobei die Maßnahme oder Maßnahmen insbesondere die Ausgabe einer Alarmmeldung und/oder die Deaktivierung von einer oder mehreren Funktionen der Vorrichtung (1) umfassen.

11. Vorrichtung nach einem der vorhergehenden Ansprüche, **dadurch gekennzeichnet, dass** das Sicherheitsmodul (3) über die kontaktlose Kommunikation (CO) mit zumindest einem Sicherheitssiegel (4) die Authentizität des zumindest einen Sicherheitssiegels (4) verifizieren kann.

12. Vorrichtung nach Anspruch 11, **dadurch gekennzeichnet, dass** im Falle einer erfolgreichen Verifikation der Authentizität des zumindest einen Sicherheitssiegels (4) eine Bestätigung (CF) von dem Sicherheitsmodul (4) über die kontaktlose Kommunikation (CO) an das zumindest eine Sicherheitssiegel (4) übermittelt wird, wobei die Bestätigung (CF) kontaktlos mittels eines externen Lesegeräts aus dem zumindest einen Sicherheitssiegel (4) auslesbar ist.

13. Vorrichtung nach einem der vorhergehenden Ansprüche, **dadurch gekennzeichnet, dass** das Sicherheitsmodul (3) und zumindest ein Sicherheitssiegel (4) über ein Pairing einander zugeordnet sind.

14. Vorrichtung nach Anspruch 13, **dadurch gekennzeichnet, dass** die Zuordnung über das Pairing im Rahmen der kontaktlosen Kommunikation (CO) zwischen dem Sicherheitsmodul (3) und dem zumindest einen Sicherheitssiegel (4) genutzt wird, insbesondere zur Authentifizierung und/oder verschlüsselten Kommunikation.

15. Vorrichtung nach einem der vorhergehende Ansprüche, **dadurch gekennzeichnet, dass** im Falle einer Manipulation zumindest eines Sicherheitssiegels (4) vorbestimmte Daten oder andere Daten als bei einem nicht manipulierten Sicherheitssiegel (4) von dem zumindest einen Sicherheitssiegel (4) an das Sicherheitsmodul (3) übermittelt werden oder die kontaktlose Kommunikation (CO) zwischen dem Sicherheitsmodul (3) und dem zumindest einem Sicherheitssiegel (4) unterbunden wird.

16. Vorrichtung nach Anspruch 15, **dadurch gekennzeichnet, dass** zumindest ein Sicherheitssiegel (4) einen oder mehrere Zustandsparameter einer oder mehrerer Komponenten des zumindest einen Sicherheitssiegels (4) misst, wobei im Falle einer Manipulation des zumindest einen Sicherheitssiegels (4) der oder die Zustandsparameter verändert werden, wobei der oder die gemessenen Zustandsparameter vorzugsweise an das Sicherheitsmodul (3) übermittelt werden und ferner vorzugsweise im Rahmen einer Authentisierung des zumindest einen Sicherheitssiegels (4) verwendet werden.

17. Vorrichtung nach einem der vorhergehende Ansprüche, **dadurch gekennzeichnet, dass** das Sicherheitsmodul (3) ein Hardware-Sicherheitsmodul ist, insbesondere in der Form eines austauschbaren tragbaren Datenträgers oder eines fest in der Vorrichtung (1) eingebauten Datenträgers.

18. Verfahren in einer Vorrichtung nach einem der Ansprüche 1 bis 17 zur Prüfung, wobei im Sicherheitsmodul (3) bei dessen Betrieb mit Hilfe der kontaktlosen Kommunikation (CO) zwischen Sicherheitsmodul (3) und dem oder den Sicherheitssiegeln (4) festgestellt wird, ob das oder die Sicherheitssiegel (4) manipuliert sind.

19. System umfassend eine Vorrichtung nach einem der Ansprüche 1 bis 17 sowie zumindest einem Sicherheitssiegel, wobei im Sicherheitsmodul (3) der Vorrichtung bei dessen Betrieb mit Hilfe der kontaktlosen Kommunikation (CO) zwischen Sicherheitsmodul (3) und dem Sicherheitssiegel (4) festgestellt wird, ob das oder die Sicherheitssiegel (4) manipuliert ist.

## Claims

1. An electronic apparatus having
- a microprocessor unit (2) and
- a cryptographic security module (3) comprising a communication unit (301) for contactless communication (CO),
wherein the communication unit (301) is adapted for contactless communication (CO) with one or several security seals (4) attached to the apparatus (1) separately from the security module (3), and
in the security module (3), upon operation of the same, it is detected with the aid of the contactless communication (CO) between the security module (3) and the security seal or seals (4) whether or not the security seal or seals (4) are manipulated.

2. The apparatus according to claim 1, **characterized in that** the security seal or seals (4) are configured such that the integrity of the security seal or seals (4) can be checked optically by a user.

3. The apparatus according to claim 1 or 2, **characterized in that** the contactless communication (CO) is a near-field communication.

4. The apparatus according to any of claims 1 to 3, **characterized in that** the security module (4) cryptographically secures one or several functions of the apparatus (1).

5. The apparatus according to claim 4, **characterized in that** the cryptographically secured function or secured functions comprises an encrypted transmission of data between the apparatus (1) and an external computer unit.

6. The apparatus according to any of the preceding claims, **characterized in that** the apparatus (1) comprises a housing (101, 102) and at least one security seal (4) is thus attached to the housing (101, 102).

7. The apparatus according to claim 6, **characterized in that** the at least one security seal (4) is visible from outside the housing and is damaged and thereby manipulated upon opening the housing (101, 102).

8. The apparatus according to any of the preceding claims, **characterized in that** in the context of the contactless communication (CO) between the security module (4) and at least one security seal (4) one or several parameters (PA) are transmitted from the at least one security seal (4) to the security module (3), wherein the parameter or parameters (PA) influence and/or enable one or several functions of the apparatus (1) and/or personalize the apparatus (1).

9. The apparatus according to any of the preceding claims, **characterized in that** several security seals (4) are provided on the apparatus (1), wherein, in the context of the contactless communication (CO) between the security module (3) and each security seal (4), one or several parameters (PA) associated with the respective security seal (4) are transmitted from the respective security seal (4) to the security module (3), wherein a linking of the parameter or parameters (PA) of the several security seals (4) influence and/or enable one or several functions of the apparatus (1) and/or personalize the apparatus (1).

10. The apparatus according to any of the preceding claims, **characterized in that,** in the event that the security module (3) determines that the security seal or seals (4) are manipulated, one or several predetermined measures are initiated by the security module (3), wherein the measure or measures comprise in particular the outputting of an alarm message and/or the deactivation of one or several functions of the apparatus (1).

11. The apparatus according to any of the preceding claims, **characterized in that** the security module (3) can verify the authenticity of the at least one security seal (4) via the contactless communication (CO) with at least one security seal (4).

12. The apparatus according to claim 11, **characterized in that** in the event of a successful verification of the authenticity of the at least one security seal (4) an confirmation (CF) is transmitted from the security module (4) via the contactless communication (CO) to the at least one security seal (4), wherein the confirmation (CF) can be read out contactlessly from the at least one security seal (4) by means of an external reading device.

13. The apparatus according to any of the preceding claims, **characterized in that** the security module (3) and at least one security seal (4) are assigned to each other via a pairing.

14. The apparatus according to claim 13, **characterized in that** the assignment via the pairing is used in the context of the contactless communication (CO) between the security module (3) and the at least one security seal (4), in particular for authentication and/or encrypted communication.

15. The apparatus according to any of the preceding claims, **characterized in that** in the event of a manipulation of at least one security seal (4) predetermined data or other data than in a non-manipulated security seal (4) are transmitted from the at least one security seal (4) to the security module (3) or the contactless communication (CO) between the security module (3) and the at least one security seal (4) is stopped.

16. The apparatus according to claim 15, **characterized in that** at least one security seal (4) measures one or several state parameters of one or several components of the at least one security seal (4), wherein in the event of a manipulation of the at least one security seal (4) the state parameter or parameters are changed, wherein the measured state parameter or parameters are preferably transmitted to the security module (3) and are further preferably employed in the context of an authentication of the at least one security seal (4).

17. The apparatus according to any of the preceding claims, **characterized in that** the security module (3) is a hardware security module, in particular in the form of an exchangeable portable data carrier or a data carrier permanently installed in the apparatus (1).

18. A method in an apparatus according to any of claims 1 to 17 for checking, wherein in the security module (3), upon operation of the same, it is determined with the aid of the contactless communication (CO) between the security module (3) and the security seal or seals (4) whether or not the security seal or seals (4) are manipulated.

19. A system comprising an apparatus according to any of claims 1 to 17 and at least one security seal, wherein in the security module (3) of the apparatus, upon operation of the module, it is determined with the aid of the contactless communication (CO) between the security module (3) and the security seal (4) whether or not the security seal or seals (4) is manipulated.

## Revendications

1. Dispositif électronique comprenant
- une unité de microprocesseur (2) et
- un module de sécurité (3) cryptographique comportant une unité de communication (301) pour la communication (CO) sans contact,
cependant que l'unité de communication (301) est conçue pour la communication (CO) sans contact avec un ou plusieurs sceaux de sécurité (4) placés au dispositif (1) séparément du module de sécurité (3), et que, dans le module de sécurité (3), lors de son fonctionnement, à l'aide de la communication (CO) sans contact entre le module de sécurité (3) et le ou les sceaux de sécurité (4), il est décelé si le ou les sceaux de sécurité (4) sont manipulés.

2. Dispositif selon la revendication 1, **caractérisé en ce que** le ou les sceaux de sécurité (4) sont réalisés de telle façon que l'intégrité du ou des sceaux de sécurité (4) peut être optiquement vérifiée par un utilisateur.

3. Dispositif selon la revendication 1 ou 2, **caractérisé en ce que** la communication (CO) sans contact est une communication en champ proche.

4. Dispositif selon une des revendications de 1 à 3, **caractérisé en ce que** le module de sécurité (4) sécurise cryptographiquement une ou plusieurs fonctions du dispositif (1).

5. Dispositif selon la revendication 4, **caractérisé en ce que** la fonction ou les fonction(s) cryptographiquement sécurisée(s) comprend une transmission chiffrée de données entre le dispositif (1) et une une unité externe d'ordinateur.

6. Dispositif selon une des revendications précédentes, **caractérisé en ce que** le dispositif (1) comprend un boîtier (101, 102) et qu'au moins un tel sceau de sécurité (4) est placé au boîtier (101, 102).

7. Dispositif selon la revendication 6, **caractérisé en ce que** le au moins un sceau de sécurité (4) est visible depuis l'extérieur et est abîmé et donc manipulé en cas d'ouverture du boîtier (101, 102).

8. Dispositif selon une des revendications précédentes, **caractérisé en ce que**, dans le cadre de la communication (CO) sans contact entre le module de sécurité (4) et au moins un sceau de sécurité (4), un ou plusieurs paramètres (PA) sont transmis du au moins un sceau de sécurité (4) au module de sécurité (3), cependant que le ou les paramètres (PA) influencent et/ou permettent une ou plusieurs fonctions du dispositif (1) et/ou personnalisent le dispositif (1).

9. Dispositif selon une des revendications précédentes, **caractérisé en ce que**, au dispositif (1), plusieurs sceaux de sécurité (4) sont prévus, cependant que, dans le cadre de la communication (CO) sans contact entre le module de sécurité (3) et chaque sceau de sécurité (4), un ou plusieurs paramètres (PA) appartenant au sceau de sécurité (4) respectif sont transmis du sceau de sécurité (4) respectif au module de sécurité (3), cependant qu'une liaison du ou des paramètres (PA) des plusieurs sceaux de sécurité (4) influence et/ou permet une ou plusieurs fonctions du dispositif (1) et/ou personnalise le dispositif (1).

10. Dispositif selon une des revendications précédentes, **caractérisé en ce que**, dans le cas où le module de sécurité (3) décèle que le ou les sceaux de sécurité (4) sont manipulés, une ou plusieurs mesures prédéterminées sont déclenchées par le module de sécurité (3), cependant que la ou les mesures comprennent en particulier l'émission d'un message d'alarme et/ou la désactivation d'une ou de plusieurs fonctions du dispositif (1).

11. Dispositif selon une des revendications précédentes, **caractérisé en ce que** le module de sécurité (3) peut, par l'intermédiaire de la communication (CO) sans contact avec au moins un sceau de sécurité (4), vérifier l'authenticité du au moins un sceau de sécurité (4).

12. Dispositif selon la revendication 11, **caractérisé en ce que**, dans le cas d'une vérification fructueuse de l'authenticité du au moins un sceau de sécurité (4), une confirmation (CF) est transmise du module de sécurité (4) par l'intermédiaire de la communication (CO) sans contact au au moins un sceau de sécurité (4), cependant que la confirmation (CF) peut être lue sans contact au moyen d'un appareil externe de lecture depuis le au moins un sceau de sécurité (4).

13. Dispositif selon une des revendications précédentes, **caractérisé en ce que** le module de sécurité (3) et au moins un sceau de sécurité (4) sont affectés l'un à l'autre par le biais d'un appariement.

14. Dispositif selon la revendication 13, **caractérisé en ce que** l'affectation par le biais de l'appariement est utilisée dans le cadre de la communication (CO) sans contact entre le module de sécurité (3) et le au moins un sceau de sécurité (4), en particulier pour l'authentification et/ou pour la communication chiffrée.

15. Dispositif selon une des revendications précédentes, **caractérisé en ce que**, dans le cas d'une manipulation d'au moins un sceau de sécurité (4), des données prédéterminées ou d'autres données que dans le cas d'un sceau de sécurité (4) non manipulé sont transmises du au moins un sceau de sécurité (4) au module de sécurité (3), ou que la communication (CO) sans contact entre le module de sécurité (3) et le au moins un sceau de sécurité (4) est empêchée.

16. Dispositif selon la revendication 15, **caractérisé en ce qu'**au moins un sceau de sécurité (4) mesure un ou plusieurs paramètres d'état d'un un ou de plusieurs composants du au moins un sceau de sécurité (4), cependant que, dans le cas d'une manipulation du au moins un sceau de sécurité (4), le ou les paramètres d'état sont modifiés, cependant que le ou les paramètres d'état mesurés sont de préférence transmis au module de sécurité (3) et sont par ailleurs utilisés de préférence dans le cadre d'une authentification du au moins un sceau de sécurité (4).

17. Dispositif selon une des revendications précédentes, **caractérisé en ce que** le module de sécurité (3) est un module de sécurité matériel, en particulier sous forme d'un support de données portable interchangeable ou d'un support de données installé à demeure dans le dispositif (1).

18. Procédé dans un dispositif selon une des revendications de 1 à 17 pour vérification, **caractérisé en ce que**, dans le module de sécurité (3), lors de son fonctionnement, à l'aide de la communication (CO) sans contact entre le module de sécurité (3) et le ou les sceaux de sécurité (4), il est décelé si le ou les sceaux de sécurité (4) sont manipulés.

19. Système comprenant un dispositif selon une des revendications de 1 à 17 ainsi qu'au moins un module de sécurité (3), cependant que, dans le module de sécurité (3) du dispositif, lors de son fonctionnement, à l'aide de la communication (CO) sans contact entre le module de sécurité (3) et le sceau de sécurité (4), il est décelé si le ou les sceaux de sécurité (4) sont manipulés.
